(19) Europäisches Patentamt / European Patent Office / Office européen des brevets

(11) **EP 1 848 147 B1**

(12) **FASCICULE DE BREVET EUROPEEN**

(45) Date de publication et mention
de la délivrance du brevet:
**29.06.2011 Bulletin 2011/26**

(51) Int Cl.:
***H04L 12/10*** *(2006.01)*     *H04L 12/44* *(2006.01)*

(21) Numéro de dépôt: **06300388.3**

(22) Date de dépôt: **21.04.2006**

(54) **Procédé de téléalimentation d'un terminal dans un réseau informatique local avec identification d'une signature de classe de puissance**

Verfahren zur Gerätefernspeisung in lokalen Netzen mit Hilfe der Identifizierung einer Leistungsklassenkennzeichnung

Method for remote power supply for a terminal in a local area network using the identification of a power class signature

(84) Etats contractants désignés:
**AT BE BG CH CY CZ DE DK EE ES FI FR GB GR HU IE IS IT LI LT LU LV MC NL PL PT RO SE SI SK TR**

(43) Date de publication de la demande:
**24.10.2007 Bulletin 2007/43**

(73) Titulaire: **Alcatel Lucent**
**75008 Paris (FR)**

(72) Inventeurs:
• **Le Creff, Michel**
**95450, VIGNY (FR)**
• **Gass, Raymond**
**67150, BOLSENHEIM (FR)**

(74) Mandataire: **Sciaux, Edmond**
**Alcatel Lucent**
**Intellectual Property & Standards**
**54 Rue La Boétie**
**75008 Paris (FR)**

(56) Documents cités:
**US-A1- 2006 082 220**

• **"Power over Ethernet: Cisco Inline Power and IEEE 802.3af" CISCO SYSTEMS WHITE PAPER, 2004, XP002383688**

**Description**

L'invention concerne un procédé de téléalimentation d'un terminal dans un réseau informatique local, par exemple de type Ethernet.

Dans un réseau informatique ordinaire, les équipements connectés à un réseau local (couramment appelé réseau LAN : *Local Area Network*), tels qu'ordinateurs, points d'accès sans fil, webcaméras, etc., sont alimentés localement par le secteur, indépendamment des liaisons de données du réseau.

Pour remédier aux difficultés (notamment de risques électriques) soulevées par cette séparation entre l'alimentation en puissance et la transmission de données, des solutions de téléalimentation des terminaux ont récemment été proposées.

Citons par exemple, pour les réseaux Ethernet, le nouveau standard *803.2af* de l'*IEEE*, également appelé PoE, *Power over Ethernet,* qui propose d'alimenter les équipements par le câble Ethernet lui-même.

L'une des applications les plus prometteuses - mais non la seule - de la téléalimentation est la téléphonie informatique, qui tend à se généraliser dans les entreprises par la constitution de réseaux utilisant le protocole IP (technologie couramment appelée VoIP, *Voice over Internet Protocol*). De tels réseaux emploient des téléphones adaptés, appelés *téléphones IP,* qui numérisent la parole téléphonique et constituent des paquets IP, ces paquets étant ensuite placés dans une trame et transmis sur le réseau Ethernet.

Un avantage des solutions de téléalimentation est de sécuriser l'alimentation électrique du réseau, qui devient ainsi insensible aux aléas du secteur. Un autre avantage est de permettre l'économie de transformateurs électriques pour chacun des équipements.

La téléalimentation n'est cependant pas sans poser un certain nombre de difficultés. Une première difficulté concerne l'identification des terminaux téléalimentés. Plus précisément, on doit toujours pouvoir raccorder au réseau un terminal non téléalimenté, à condition toutefois de ne pas lui fournir de puissance, ce qui l'endommagerait. La demande de brevet européen n° EP 1 100 226 (Alcatel) remédie à ce problème au moyen d'un procédé permettant de discriminer les terminaux téléalimentés et limiter ainsi la fourniture de puissance à ce type de terminal.

Une deuxième difficulté concerne la quantité de puissance électrique allouée à chaque terminal par le dispositif de téléalimentation.

Précisons que les terminaux téléalimentés (tels que les téléphones IP) sont à ce jour classés par catégorie ou « classe » de puissance, en fonction de la puissance maximale consommée. Les terminaux téléalimentés, par exemple ceux compatibles avec le standard *IEEE 803.2af* précité, intègrent une signature spécifique, dite signature de téléalimentation (par exemple sous forme d'une impédance prédéterminée), caractéristique de la puissance maximale consommée par le terminal.

Le standard *IEEE 803.2af* définit quatre classes de puissance, numérotées de 0 à 3 et auxquelles sont affectées les puissances listées dans le tableau ci-dessous (Source : *IEEE Std 802.3 af*™-2003, IEEE Computer Society, Juin 2003, p.41):

| Classe | Puissance minimale à la sortie du dispositif de téléalimentation |
|--------|------------------------------------------------------------------|
| 0 | 15,4 W |
| 1 | 4,0 W |
| 2 | 7,0 W |
| 3 | 15,4 W |

La détection par le dispositif de téléalimentation de la signature de téléalimentation d'un terminal entraîne l'allocation à celui-ci d'une puissance correspondant à la classe de l'équipement. Par défaut, les terminaux se voient attribuer la classe 0. En d'autres termes, la puissance allouée par défaut à un équipement téléalimenté est de 15,4 W.

Le document « **Power over Ethernet : CISCO Inline Power and IEEE 802.3 af** » CISCO SYSTEMS WHITE PAPER, 2004, XP 002383688 décrit un procédé de téléalimentation d'un terminal dans un réseau informatique local au moyen d'un dispositif de téléalimentation, comprenant les opérations consistant à :

- Détecter la présence d'un terminal capable d'être téléalimenté, lorsque se terminal est branché sur le réseau local.
- Puis informer le dispositif de téléalimentation de la puissance électrique nécessaire au terminal.
- Déterminer le caractère acceptable de la puissance nécessaire au terminal, et :

    -- si la puissance nécessaire est considérée comme acceptable, allouer cette puissance à terminal ;

-- si la puissance nécessaire est considérée comme inacceptable, refuser cette puissance à terminal.

Ce document n'envisage pas le cas où la puissance nécessaire à un terminal varie au cours du temps. La puissance allouée n'est pas remise en question tant que le terminal n'est pas débranché puis rebranché au réseau local.

D'autre part, les terminaux n'ont généralement pas tous besoin de la puissance maximale en même temps. Il en résulte que le dispositif de téléalimentation est dimensionné pour fournir la somme de toutes les puissances maximales requises, alors que celles-ci qui ne lui sont pratiquement jamais demandées simultanément.

Le document US 20061082220 décrit un procédé de téléalimentation qui remédie à cet inconvénient parce qu'il consiste à allouer à un terminal une puissance qui varie au cours du temps en fonction du besoin du terminal. Au moment du raccordement du terminal à la ligne, le terminal produit une signature de téléalimentation puis une signature de classe conformément à la norme IEE 802.3 af. Lorsque le besoin de puissance change, le terminal demande au dispositif de téléalimentation de lui allouer une nouvelle puissance. Pour cela, le terminal échange des messages avec le dispositif de téléalimentation.

Selon un mode de réalisation, le terminal module le courant d'alimentation au moyen d'un modulateur de courant, pour envoyer des messages au dispositif de téléalimentation. Il envoie un message mentionnant explicitement une nouvelle classe de puissance correspondant au nouveau besoin du terminal.

Le dispositif de téléalimentation module la tension de téléalimentation pour envoyer des messages à un terminal. Dans le cas d'une demande de changement de classe de puissance, il envoie, par ce moyen, au terminal concerné un message qui indique qu'il accepte, ou qu'il refuse, d'allouer la nouvelle puissance, correspondant à la nouvelle classe.

Ces moyens de transmission bidirectionnelle permettent de réduire la puissance allouée à un terminal sitôt que la puissance requise par ce terminal diminue. La puissance ainsi libérée peut alors être allouée à un autre terminal, sans nécessiter un plus grand dimensionnement du dispositif de téléalimentation. Il en résulte de substantielles économies. Bien entendu, le même procédé permet d'augmenter à nouveau (jusqu'à un certain plafond) la puissance allouée à ce terminal sitôt que la puissance requise par ce terminal augmente.

Ce procédé a pour inconvénient de nécessiter dans chaque terminal des moyens de communication bidirectionnelle relativement complexes.

L'invention vise notamment à remédier à cet inconvénient. A cet effet, l'invention propose un procédé de téléalimentation d'un terminal dans un réseau informatique local au moyen d'un dispositif de téléalimentation, comprenant, lors du raccordement du terminal à ce dispositif de téléalimentation, des opérations d'allocation d'une puissance consistant à :

- sélectionner, parmi une pluralité de classes de puissance différentes prédéterminées, une classe correspondant à la puissance requise par ce terminal ;
- produire au moyen du terminal une signature correspondant à la classe de puissance sélectionnée ;
- identifier, dans le dispositif de téléalimentation, la signature produite par le terminal ;
- en déduire la classe de la puissance requise par le terminal (3),
- déterminer le caractère acceptable de la classe de puissance requise par le terminal, et
- si la classe de puissance requise est décrétée acceptable, allouer au terminal, par le dispositif de téléalimentation, une puissance correspondant à la classe de puissance requise ;
- si la classe de puissance requise est décrétée inacceptable, refuser d'allouer au terminal, par le dispositif de téléalimentation, une puissance correspondant à la classe de puissance requise;

caractérisé en ce qu'il comprend en outre les opérations consistant à :

- détecter au sein du terminal une modification du besoin de puissance électrique ;
- sélectionner, parmi une pluralité de classes de puissance différentes prédéterminées, une nouvelle classe correspondant au nouveau besoin de puissance pour ce terminal ;
- couper le courant de ligne pendant une durée prédéterminée ;
- détecter dans le dispositif de téléalimentation cette coupure du courant de ligne, constater que sa durée a une valeur au moins égale à une valeur prédéterminée, et en déduire que le terminal requiert un changement de classe de puissance;
- et refaire les opérations d'allocation d'une puissance, listées ci-dessus.

Le procédé ainsi caractérisé permet d'utiliser des moyens très simples pour obtenir un changement de classe de puissance parce que :

1) Dans un premier temps, le terminal ne fait que signaler qu'il souhaite changer de classe de puissance. Il ne transmet pas d'information sur la nouvelle classe de puissance : Il fait une coupure du courant de ligne, pendant une durée prédéterminée, pour informer le dispositif de téléalimentation que le terminal requiert un changement de classe de puissance.

2) En réponse à ce signal, le dispositif de téléalimentation lance les opérations d'identification d'une signature de classe, alors que, selon l'art antérieur, ces opérations sont lancées seulement au moment du raccordement du terminal à la ligne.

3) Puis le terminal ré-utilise les moyens de production d'une signature de classe, pour indiquer la nouvelle classe de puissance correspondant au nouveau besoin de puissance, alors que, selon l'art antérieur, ces moyens sont utilisés seulement une fois, au moment du raccordement du terminal à la ligne.

Cette coupure, de durée prédéterminée, et la production par le terminal d'une signature, sans transmission de données numériques par le terminal, permet d'effectuer une régulation de manière simple et fiable.

La signature peut par exemple être caractérisée au moins par une grandeur physique (telle qu'une impédance) choisie parmi une pluralité de grandeurs physiques prédéterminées et, suivant un mode particulier de mise en oeuvre, la production de la signature comprend une opération consistant, pour le terminal, à présenter sur une ligne le reliant au dispositif de téléalimentation un courant prédéterminé représentatif de la grandeur physique sélectionnée, tandis que l'identification de la signature comprend une opération consistant, pour le dispositif de téléalimentation, à mesurer l'intensité de ce courant.

La production de la signature est de préférence précédée d'une coupure momentanée du courant de ligne par le terminal.

La signature peut aussi être caractérisée au moins par un temps de réponse du terminal à un signal de tension produit par le dispositif de téléalimentation.

Les opérations de production et d'identification de la signature comprennent alors les opérations suivantes :

- coupure par le terminal du courant d'une ligne le reliant au dispositif de téléalimentation ;
- coupure par le dispositif de téléalimentation de la tension d'alimentation du terminal ;
- présentation par le dispositif de téléalimentation d'un signal de tension d'identification d'une valeur différente de la tension d'alimentation ;
- production par le terminal d'un courant d'identification ;
- coupure par le terminal du courant d'identification après un temps de réponse prédéterminé suivant la présentation par le dispositif de téléalimentation du signal de tension d'identification ;
- mesure par le dispositif de téléalimentation de ce temps de réponse.

En fonction du caractère acceptable ou non de la modification de la puissance, l'une des opérations suivantes peut être prévue :

- si la modification de puissance est décrétée acceptable, remise par le dispositif de téléalimentation de la tension d'alimentation du terminal à un premier instant prédéterminé suivant la coupure par le terminal du courant d'identification ;
- si la modification de puissance est décrétée inacceptable, remise par le dispositif de téléalimentation de la tension d'alimentation du terminal à un deuxième instant prédéterminé, différent du premier, suivant la coupure par le terminal du courant d'identification.

D'autres objets et avantages de l'invention apparaîtront à la lumière de la description faite ci-après en référence aux dessins annexés dans lesquels :

- la figure 1 est un schéma représentant de manière synthétique un réseau local de type Ethernet ;
- la figure 2 est un schéma synoptique montrant l'association d'un équipement muni d'un dispositif de téléalimentation et d'un terminal téléalimenté ;
- la figure 3 est un diagramme illustrant les différentes étapes d'un procédé de téléalimentation optimisée d'un terminal au sein d'un réseau de type Ethernet tel que celui de la figure 1 ;
- la figure 4 est un diagramme montrant les variations du courant circulant dans la ligne Ethernet, qui illustrent la présentation par le terminal d'une requête de changement de puissance, et
- la figure 5 rassemble quatre diagrammes montrant les variations respectives :

- du courant circulant dans la ligne Ethernet,
- de la tension d'alimentation du terminal, fournie par le dispositif de téléalimentation,
- d'une tension d'identification fournie par le dispositif de téléalimentation, et
- d'un courant d'identification fourni par le terminal en réponse à la tension d'identification,

ces variations illustrant la présentation par le terminal d'une requête de changement de puissance et la réponse à cette requête par le dispositif de téléalimentation.

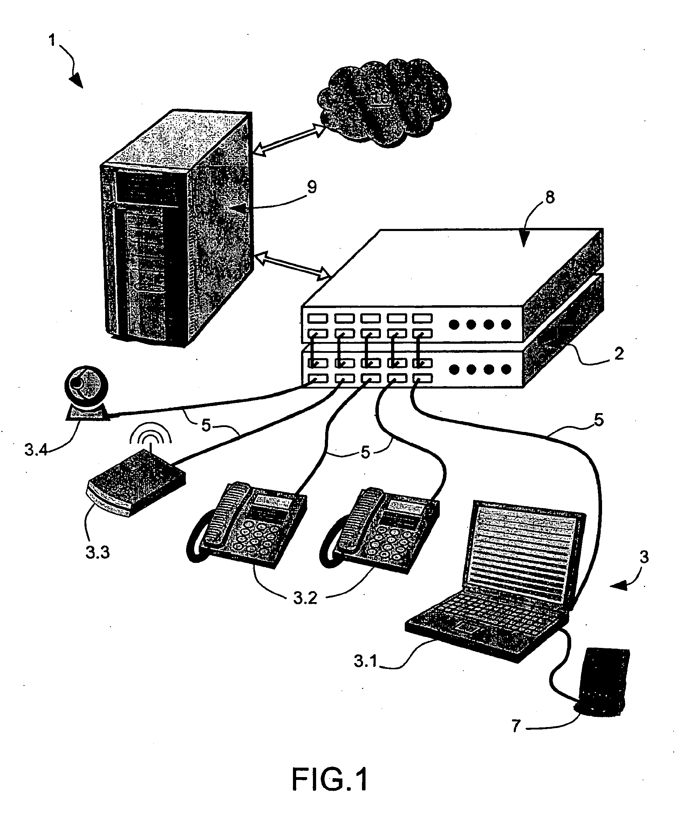

Sur la figure 1 est représenté un réseau local (LAN) 1 de type Ethernet, qui comprend un dispositif 2 de téléalimentation (désigné dans la littérature et dans ce qui suit par son acronyme anglais PSE, « Power Source Equipment ») et, reliés à celui-ci, une pluralité N d'équipements 3 téléalimentés (désignés dans la littérature par le sigle PD, acronyme de la dénomination anglaise « Powered Device »), ci-après simplement dénommés « terminaux ».

Le PSE 2 se présente en l'occurrence sous la forme d'un répéteur, muni d'une unité 4 intégrée de téléalimentation, les terminaux 3 pouvant quant à eux se présenter sous la forme d'un ordinateur portable 3.1, de deux téléphones IP 3.2, d'un point d'accès LAN sans fil 3.3, ou encore d'une webcaméra 3.4 (cette liste étant non exhaustive), reliés au répéteur par des câbles ou « lignes » Ethernet 5 à quatre paires de fils 5.1, 5.2, 5.3, 5.4 et munis chacun d'une alimentation 6 intégrée dont la puissance est fournie par l'unité de téléalimentation 4 du PSE 2.

A chaque terminal peut en outre être relié au moins un périphérique 7, par exemple par l'intermédiaire de ports USB ou PCMCIA. En l'occurrence, on a représenté un organiseur personnel 7 (usuellement désigné par le sigle PDA, correspondant à la dénomination anglaise « Personal Data Assistant »), relié à l'ordinateur portable 3.1 par l'intermédiaire duquel il est alimenté.

Le réseau 1 comprend en outre, dans l'exemple illustré, un commutateur 8 (qui peut être téléalimenté ou non), relié d'une part au répéteur 2 et d'autre part à un serveur 9 de réseau local, lequel est par ailleurs relié à un réseau 10 métropolitain (MAN) ou étendu (WAN, par exemple Internet). Dans une version optimisée, le réseau 1 est dépourvu de répéteur, le PSE étant alors le commutateur 8 lui-même, qui intègre les moyens nécessaires pour pourvoir à la téléalimentation des terminaux 3 via les lignes Ethernet 5.

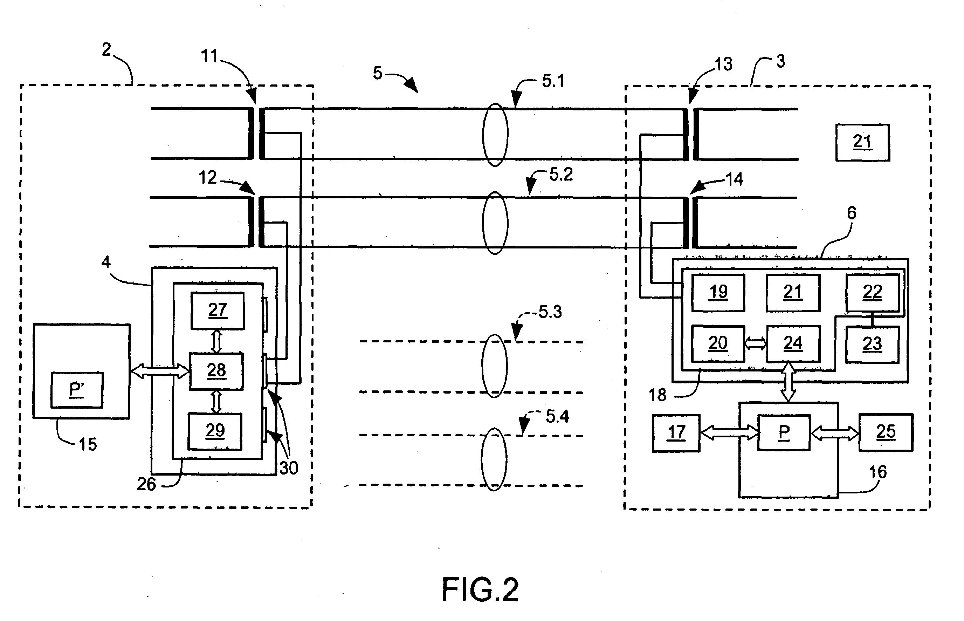

On a représenté très schématiquement sur la figure 2 le raccordement d'un terminal 3 (par exemple un téléphone IP 3.2) à un PSE 2 (par exemple le répéteur). Comme cela est visible sur la figure, deux paires de fil 5.1, 5.2 sont utilisées à la fois pour la l'émission et la réception de données d'une part, et pour la téléalimentation du terminal 3 d'autre part. A cet effet, le PSE 2 comprend deux transformateurs 11, 12 ayant chacun deux enroulements dont l'un est relié à l'unité 4 de téléalimentation, le terminal 3 comprenant, de manière correspondante, deux transformateurs 13, 14 ayant chacun deux enroulement dont l'un est relié à l'alimentation 6. Les deux autres paires de fil 5.3, 5.4 du câble 5 sont ici inutilisées.

Principes

On cherche à minimiser la puissance totale fournie par le PSE 2, afin de faire des économies d'énergie et de réduire au sein du réseau 1 le nombre total de PSE.

La puissance totale fournie par le PSE 2, notée $P_F$, est égale à la somme des puissances unitaires $P_{Fi}$ (où $1 \leq i \leq N$) fournies (ou allouées) à chaque terminal 3 :

$$P_F = \sum_i P_{Fi}$$

Afin de minimiser cette puissance, on contrôle en permanence (par exemple à intervalles réguliers) la puissance allouée à chaque terminal 3 en fonction de la puissance requise par celui-ci.

Pour cela, on définit pour un terminal 3 donné (par exemple un téléphone IP 3.2) plusieurs modes de fonctionnement requérant chacun une puissance différente.

A chaque mode de fonctionnement correspond une puissance prédéterminée permettant au terminal 3 de fonctionner suivant ce mode. On définit pour chaque mode de fonctionnement une classe correspondant à sa puissance (cette classe n'étant pas nécessairement confondue avec l'une des classes de téléalimentation préconisées par le standard *IEEE 803.2af* et listées le tableau ci-dessus), chaque classe étant mémorisée à la fois dans le terminal et dans le PSE.

Le tableau ci-dessous illustre un exemple de segmentation du fonctionnement d'un téléphone IP en plusieurs modes, à chacun desquels sont affectés, d'une part une puissance prédéterminée, et d'autre part une classe correspondant à cette puissance.

| Mode de fonctionnement | Description | Puissance | Classe |
|---|---|---|---|
| Veille | - Téléphone raccroché | 0,5 W | 1 |

(suite)

| Mode de fonctionnement | Description | Puissance | Classe |
|---|---|---|---|
| Faible puissance | - Appel normal sans mains libres<br>- Pas de rétroéclairage de l'écran | 2 W | 2 |
| Moyenne puissance | - Appel normal avec ou sans mains libres<br>- Rétroéclairage<br>- Oreillette sans fil | 5 W | 3 |
| Puissance élevée | - Appel avec vidéo<br>- Téléphone avec prise(s) USB | 10 W | 4 |

Une telle segmentation est donnée à titre purement indicatif. En fonction de la nature et des besoins de chaque terminal 3, on peut définir une segmentation différente, comprenant plus ou moins de classes.

On peut ainsi définir plusieurs dizaines de classes, correspondant chacune à une puissance différente. Par exemple, on peut définir 30 classes correspondant à des puissances allant de 0,5W à 15W par pas de 0,5W. Il va de soi que plus le terminal 3 comprend de modes de fonctionnement différents, plus le nombre de classes est élevé. Pour un ordinateur portable par exemple, on peut définir des classes différentes pour chacun des modes de fonctionnement suivants (liste non limitative) :

- ordinateur éteint,
- ordinateur allumé avec économiseur d'écran actif,
- ordinateur et écran allumés,
- lecteur interne (tel que CD-ROM) actif,
- branchement sur port USB d'un périphérique à faible consommation d'énergie (tel que souris, clé USB, etc.),
- branchement sur port USB d'un périphérique à consommation moyenne d'énergie (tel que PDA, lecteur de disque externe, etc.),
- branchement sur port USB d'un périphérique à forte consommation d'énergie (tel que disque dur).

Régulation de la puissance allouée

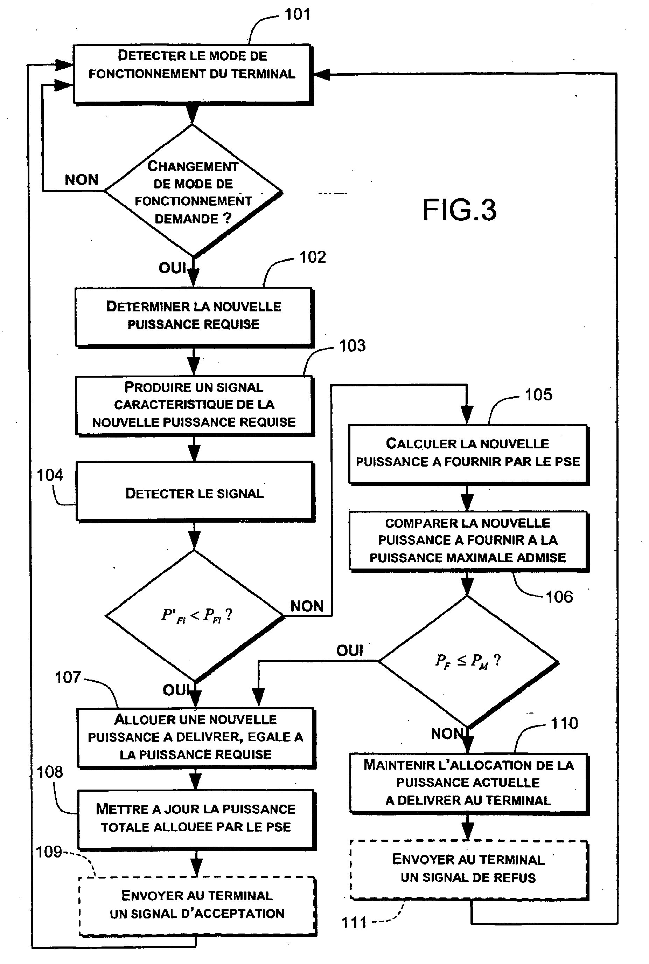

Pour réguler la puissance allouée à chaque terminal 3, on procède comme suit (Cf. figure 3).

Une première opération 101 consiste à détecter en permanence le mode de fonctionnement du terminal 3. Dès lors qu'un changement de mode de fonctionnement est détecté, par exemple lorsque l'utilisateur d'un téléphone IP initialement en mode faible puissance active la fonction mains libres, ou lorsque l'utilisateur d'un ordinateur portable branche un PDA sur un port USB de celui-ci, une deuxième opération 102 consiste, pour le terminal 3, à déterminer la nouvelle puissance requise $P'_{Fi}$ (que cette nouvelle puissance requise soit supérieure ou inférieure à la puissance $P_{Fi}$ allouée actuelle), une troisième opération 103 consistant à formule une requête de changement de puissance désignant la classe correspondante, sous la forme d'un signal détecté par le PSE 2.

A cet effet, le terminal 3 produit lors de la troisième opération 103 une signature désignant la classe correspondant à la nouvelle puissance requise $P'_{Fi}$, cette signature (dite signature de classe) étant directement identifiée par le PSE 2 lors d'une quatrième opération 104 dite de détection. Concrètement, pour commander la lecture par le PSE 2 de la signature de classe, le terminal 3 peut être programmé pour précéder la production de la signature d'une interruption momentanée, ou d'une modulation, du courant circulant sur la ligne 5. Nous verrons ci-après plus en détail la manière dont la signature est produite par le terminal 3 et identifiée par le PSE 2.

Une fois la signature identifiée par le PSE 2, celui-ci en déduit la nouvelle puissance requise $P'_{Fi}$ et recalcule (opération 105) la puissance totale $P_F$ qu'il doit fournir à l'ensemble des terminaux 3 qui lui sont connectés.

Cette nouvelle puissance à fournir $P_F$ est alors comparée (opération 106) à une puissance maximale admise $P_M$, prédéterminée, par exemple égale à la puissance maximale que peut effectivement fournir le PSE 2, ou à cette puissance maximale $P_M$, diminuée d'une marge de sécurité correspondant à la puissance nécessaire qu'il peut être nécessaire d'allouer à certains terminaux particuliers non régulés (par exemple, dans le cadre de la téléphonie IP, les téléphones de cadres dirigeants ou d'infirmerie bénéficient en permanence d'une allocation de puissance correspondant à leur puissance maximale).

Tant que la nouvelle puissance totale à fournir $P_F$ ne dépasse pas la puissance maximale admise $P_M$ ($P_F \leq P_M$), le PSE 2 décrète acceptable la requête de changement de puissance, règle (opération 107) la puissance allouée au terminal 2 à la valeur de la nouvelle puissance requise $P'_{Fi}$ et effectue en conséquence une mise à jour de sa puissance totale allouée (opération 108).

Une opération suivante 109 consiste pour le PSE 2 à envoyer au terminal 3 un signal d'acceptation, analysé par un processeur 16 du terminal 3. Le terminal 3 adopte en conséquence le nouveau mode de fonctionnement correspondant à la nouvelle puissance allouée. Dans l'exemple du téléphone IP 3.2 décrit ci-dessus, le téléphone 3.2 effectue les opérations demandées par l'utilisateur. Dans l'exemple de l'ordinateur portable 3.1, celui-ci alimente le PDA 7 connecté.

Par contre, si la nouvelle puissance totale à fournir $P_F$ dépasse la puissance maximale admise $P_M$ ($P_F>P_M$), le PSE 2 décrète inacceptable la requête de changement de puissance : il maintient en conséquence la puissance $P_{Fi}$ allouée au terminal 3 (opération 110) et lui envoie (opération 111) un signal de refus, par exemple sous la forme d'une inversion de polarité ou d'un temps de réponse (comme nous le verrons ci-après).

Le mode de fonctionnement du terminal 3 reste alors inchangé. Dans le cas du téléphone IP 3.2 décrit ci-dessus, celui-ci peut être conçu pour avertir l'utilisateur que les commandes dont il a demandé l'activation sont indisponibles. Un message d'erreur peut être généré, indiquant que la puissance allouée est insuffisante. Une invite peut également inciter l'utilisateur à effectuer une commande alternative acceptable en termes de puissance requise. Dans le cas de l'ordinateur portable 3.1, le PDA 7 connecté n'est pas alimenté, et un message d'erreur peut être affiché, qui informe l'utilisateur que la puissance allouée est insuffisante pour alimenter le périphérique.

Suivant un mode de réalisation illustré sur la figure 3, avant de calculer la nouvelle puissance totale à fournir, le PSE 2 commence par comparer la nouvelle puissance $P'_{Fi}$ requise par le terminal 3 à sa puissance $P_{Fi}$ allouée actuelle.

Ce n'est que si la nouvelle puissance $P'_{Fi}$ requise par le terminal 3 est supérieure à sa puissance $P_{Fi}$ allouée actuelle que les opérations 105 de calcul de la nouvelle puissance totale $P_F$ à fournir, et les opérations suivantes 106 à 111 (comparaison à la puissance maximale $P_M$ admise, régulation ou maintien de la puissance, mise à jour de la puissance totale allouée, envoi du signal éventuel d'acceptation ou de refus), sont effectuées.

Si au contraire la nouvelle puissance $P'_{Fi}$ requise par le terminal est inférieure à sa puissance $P_{Fi}$ allouée actuelle, la puissance allouée est automatiquement réglée à la valeur de la nouvelle puissance requise $P'_{Fi}$. Un signal d'acceptation est envoyé par le PSE 2 au terminal 3 (opération 109).

La régulation de la puissance allouée par le PSE 2 à chaque terminal 3 est effectuée aussi souvent que nécessaire.

En particulier, une régulation peut être opérée deux fois de suite dans la situation où un terminal 3 initialement éteint ou déconnecté du réseau 1 et auquel sont branchés des périphériques (par exemple un ordinateur 3.1 avec un PDA 7 ou un disque dur externe connecté sur une prise USB) est soudainement allumé ou connecté au réseau 1. Dans cette situation, au moment de l'allumage ou de la connexion, le terminal 3 ne dispose pas d'une puissance suffisante pour lui permettre de détecter des périphériques. Dans ce cas, la régulation de puissance s'effectue en deux temps, premièrement sur la base de la classe de puissance du terminal 3 seul (une première signature de classe étant produite par le terminal 3 et identifiée par le PSE 2), puis, deuxièmement, après détection des périphériques par le terminal 3, sur la base de la classe de puissance du terminal 3 avec ses périphériques (une seconde signature de classe étant produite par le terminal 3 et identifiée par le PSE 2).

Le procédé qui vient d'être décrit permet d'optimiser, en la régulant à la demande, la puissance fournie par un PSE à un ensemble de terminaux téléalimentés qui lui sont reliés. La puissance allouée à chaque terminal correspondant à la puissance juste nécessaire au mode de fonctionnement actuel, on peut ainsi diminuer considérablement la puissance totale consommée par le PSE et, de la sorte, tout en réalisant de substantielles économies d'énergie, diminuer la puissance maximale de chaque PSE d'un même réseau.

Ainsi, dans le cas de la téléphonie IP, et en appliquant les critères définis dans le tableau ci-dessus, les inventeurs ont constaté qu'à chaque instant, dans une flotte de 100 téléphones, 15 seulement sont en mode de fonctionnement à moyenne puissance (5W), les 85 autres étant en mode veille (0,5W). Dans le cas d'un réseau Ethernet classique, où la puissance allouée à chaque téléphone est au moins égale à la puissance correspondant au mode de fonctionnement à puissance maximale (15,4W si le terminal est susceptible de consommer plus de 7W), la puissance totale fournie par le PSE à la flotte est de 1540W, tandis que dans le cas d'un réseau mettant en oeuvre le procédé qui vient d'être décrit, la puissance fournie par le PSE à la flotte correspond au strict nécessaire : 117,5W, soit treize fois moins que dans le cas du réseau classique.

Production et identification de la signature

Comme nous l'avons vu, pour chaque mode de fonctionnement d'un terminal 3, une classe est attribuée à la puissance consommée correspondante. Les classes sont inscrites dans une mémoire 17 intégrée au terminal 3. Les signatures correspondantes sont caractérisées par l'expression d'un ou plusieurs paramètres physiques, comme nous allons le voir.

Suivant un premier mode de réalisation, pour un petit nombre de classes différentes (c'est-à-dire pour un petit nombre de modes de fonctionnements différents - par exemple moins de dix), il peut suffire de caractériser chaque signature par un unique paramètre physique, tel que la valeur d'une impédance prédéterminée intégrée au terminal 3.

Le fonctionnement est le suivant. Dès que le terminal 3 détecte en son sein le besoin d'un changement de mode de fonctionnement (par exemple, dans le cas d'un téléphone IP, le décrochement du combiné ou, dans le cas d'un ordinateur portable, la connexion d'un périphérique), son processeur 16 calcule la nouvelle puissance requise $P'_{Fi}$, détermine la classe correspondante et choisit la signature (c'est-à-dire l'impédance) convenable à présenter au PSE 2.

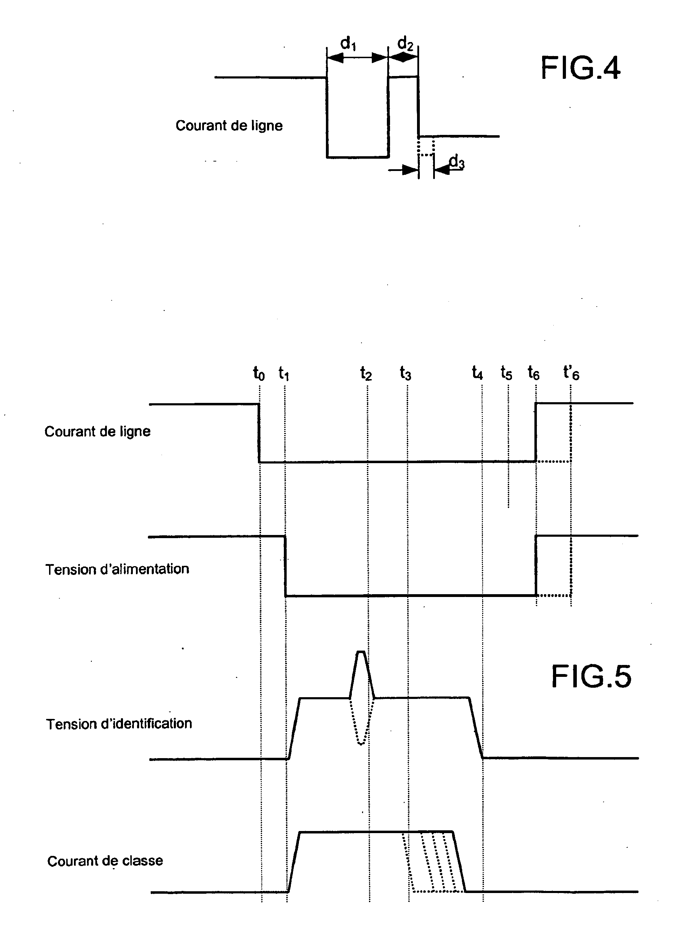

Le terminal 3 génère alors la séquence suivante (Cf. figure 4) :

- coupure du courant $I_{ligne}$ de la ligne Ethernet, pendant une première durée prédéterminée $d_1$,
- remise du courant $I_{ligne}$ sur la ligne pendant une seconde durée prédéterminée $d_2$,
- nouvelle coupure du courant.

Cette séquence, détectée par le PSE 2, permet à celui-ci de reconnaître une requête de changement de puissance présentée par le terminal 3. La précision de cette séquence, qui peut être réitérée pour plus de sécurité, permet au PSE 2 de ne pas confondre la coupure de courant provoquée par le terminal 3 avec un simple faux contact.

Immédiatement après la nouvelle coupure de courant, ou après une durée $d_3$, le terminal 3 présente sa signature, caractéristique de la nouvelle puissance requise, sous forme d'un courant de signature $I_{sign}$ d'une intensité prédéterminée proportionnelle à la valeur de l'impédance choisie. Cette intensité $I_{sign}$ est mesurée par le PSE 2 qui, par le calcul inverse à celui effectué par le terminal 3, en déduit la classe (et donc la valeur) de la nouvelle puissance requise $P'_{Fi}$.

Après la présentation de la signature par le terminal 3, le PSE 2 coupe la tension d'alimentation. Il détermine la recevabilité de la requête, puis remet la tension d'alimentation après un premier temps prédéterminé, caractéristique d'une acceptation de la modification de la puissance allouée au terminal 3, ou après un second temps prédéterminé (de préférence plus long que le premier), caractéristique d'un refus d'une telle modification.

Suivant un second mode de réalisation, pour un nombre important de classes différentes (c'est-à-dire pour un nombre important de modes de fonctionnements différents - par exemple plusieurs dizaines), la signature est caractérisée par une combinaison de plusieurs paramètres physiques, tels que, d'une part, la valeur d'une impédance prédéterminée, intégrée au terminal 3 (qui s'exprime par la valeur d'un courant de signature $I_{sign}$ commandé par le terminal 3, qui est fonction de cette impédance), et, d'autre part, un temps $t_{sign}$ - également prédéterminé - de réponse à la présentation par le PSE 2 d'un signal de tension.

Le fonctionnement est le suivant. Dès que le terminal 3 détecte en son sein le besoin d'un changement de mode de fonctionnement (par exemple, dans le cas d'un téléphone IP, le décrochement du combiné ou, dans le cas d'un ordinateur portable, la connexion d'un périphérique), son processeur 16 calcule la nouvelle puissance requise $P'_{Fi}$, détermine la classe correspondante et la signature convenable (sous forme d'une combinaison d'une impédance et d'un temps de réponse $t_{sign}$ prédéterminés) à présenter au PSE 2.

La présentation de la signature s'effectue alors en deux phases (Cf. figures 4 et 5) : une première phase de présentation de l'impédance, et une deuxième phase de présentation du temps de réponse.

La première phase comprend les étapes suivantes :

- coupure par le terminal 3 du courant $I_{ligne}$ de la ligne Ethernet à un instant initial $t_0$, et déconnexion simultanée de la charge du terminal 3,
- remise par le terminal 3 du courant de ligne $I_{ligne}$ pendant une seconde durée prédéterminée,
- nouvelle coupure par le terminal 3 du courant $I_{ligne}$.

Le PSE 2, qui est programmé pour reconnaître à cette séquence une requête de changement de puissance présentée par le terminal 3, coupe alors la tension d'alimentation $V_{alim}$, à un instant $t_1$. Le terminal 3 présente sur la ligne Ethernet 5 son impédance choisie, ce qui se traduit par la génération d'un courant de signature $I_{sign}$ dont la valeur est mesurée par le PSE 2 . Bien que cet ordre opératoire soit préféré, ces deux opérations peuvent être interverties, la présentation par le terminal 3 de son impédance pouvant avoir lieu avant la coupure par le PSE 2 de la tension d'alimentation $V_{alim}$.

Le PSE 2 présente ensuite sur la ligne une tension dite d'identification, d'une valeur différente (de préférence inférieure) à celle de la tension d'alimentation. Cette tension d'identification est par exemple comprise entre 15,5V et 20V. En réponse, le terminal 3 génère sur la ligne un courant $I_{iden}$ d'identification.

Après un certain délai débute la deuxième phase : le PSE 2 génère à un instant $t_2$ une impulsion de synchronisation du terminal 3, sous forme d'un pic de tension, qui initialise la mesure du temps de réponse $t_{sign}$ du terminal 3. A un instant $t_3=t_2+t_{sign}$, le terminal 3 coupe le courant d'identification $I_{iden}$. Le PSE 2 mesure le temps de réponse $t_{sign}$ et déduit du doublet ($I_{sign}$, $t_{sign}$), caractéristique de la signature ainsi présentée par le terminal 3, la classe (et donc la valeur) de la nouvelle puissance $T'_{Fi}$ requise par celui-ci.

Pour illustrer la diversité des classes de puissance, on a représenté en pointillés sur la figure 5 plusieurs possibilités de coupure du courant d'identification $I_{iden}$, selon la valeur du temps de réponse $t_{sign}$ (c'est-à-dire suivant la valeur de la signature et donc de la classe).

Le PSE 2 coupe ensuite, à un instant $t_4$, la tension d'identification.

Après une durée prédéterminée suivant l'instant $t_3$, le terminal 3 reconnecte sa charge à un instant $t_5$, en prévision de la remise de la tension d'alimentation.

Après avoir déterminé le caractère acceptable de la requête de changement de puissance, le PSE 2 remet la tension d'alimentation $V_{alim}$, soit à un premier instant $t_6$ prédéterminé, caractéristique d'une acceptation de la modification de la puissance allouée au terminal 3, soit à un second instant $t'_6$ prédéterminé différent du premier $t_5$ (de préférence postérieur à celui-ci), caractéristique d'un refus d'une telle modification.

La procédure qui vient d'être décrite permet d'identifier, parmi une pluralité de classes de puissance, la classe de puissance requise par le terminal 3 sans aucun échange de données entre celui-ci et le PSE 2, et donc sans qu'il soit nécessaire de programmer l'adresse réseau du PSE 2 dans le terminal 3, ce qui garantit la simplicité et la fiabilité de l'ensemble du procédé de régulation de la puissance.

En variante, afin de diminuer autant que possible le temps de « négociation » (c'est-à-dire la durée séparant l'instant auquel est détecté un besoin de changement de puissance dans le terminal, et l'instant auquel la réponse du PSE est transmise au terminal), et donc le temps pendant lequel le terminal n'est plus alimenté électriquement, on supprime la phase d'interruption du courant de ligne pendant un temps calibré (tel qu'illustré sur la figure 4), de sorte que seules sont conservées les étapes comprises entre la coupure (à $t_1$) et la remise (à $t_6$ ou $t'_6$) par le PSE de la tension d'alimentation.

Agencement du terminal et du PSE

Afin de permettre la régulation de la puissance allouée, et en particulier la production et l'identification de la signature de classe, tel que décrit ci-dessus, le terminal 3 et le PSE 2 et présentent des agencements différents des terminaux et PSE connus.

Le terminal 3, en particulier, comprend des moyens pour détecter en son sein un besoin de changement de puissance. Ces moyens peuvent comprendre des moyens pour mesurer en permanence le besoin en puissance propre du terminal et le besoin en puissance supplémentaire requis par un (des) éventuel(s) périphérique(s), ainsi que, dans ce cas, des moyens pour calculer la puissance totale requise par l'ensemble formé par le terminal et de son (ses) périphérique(s), par exemple sous la forme d'un programme spécifique P implémenté dans son processeur 16.

Le terminal 3 comprend par ailleurs des moyens (par exemple sous la forme de lignes de commande dans le programme P) pour sélectionner dans la mémoire 17, parmi les classes de puissance inscrites, correspondant chacune à un mode de fonctionnement particulier, une classe de puissance correspondant à la nouvelle puissance requise par le terminal 3 lorsqu'un besoin de changement de mode de fonctionnement a été détecté.

Le terminal 3 comprend en outre au moins un circuit intégré 18 formant interface entre la ligne Ethernet 5 et le processeur 16, ce circuit intégré 18 comprenant :

- des moyens 19 pour produire une signature de téléalimentation, c'est-à-dire une signature permettant au PSE de détecter la capacité du terminal à être téléalimenté, comme décrit dans la demande précitée N°EP 1 100 226 (ces moyens peuvent se présenter sous la forme d'une mémoire dans laquelle est inscrite la signature de téléalimentation, ou sous la forme d'une borne à laquelle est raccordée une impédance prédéterminée, externe au circuit intégré 18),
- des moyens 20 pour produire la signature de classe, caractéristique de la classe sélectionnée, qui comprennent par exemple une bascule commandée permettant la connexion momentanée, sur la ligne Ethernet 5, d'une impédance choisie parmi un groupe d'impédances différentes,
- des moyens 21 pour détecter le signal, en provenance du PSE 2, d'acceptation ou de refus de la requête de changement de puissance,
- une bascule 22commandée permettant la connexion sur la ligne Ethernet d'un convertisseur 23de courant continu (DC/DC) intégré à l'alimentation du terminal 3,
- des moyens 24de communication avec le processeur 16 du terminal 3, ces moyens étant agencés pour :

    - recevoir une commande du processeur 16 pour la formulation d'une requête de changement de puissance, et
    - transmettre au processeur 16, en retour, la réponse du PSE 2 (acceptation ou refus de la requête de changement de puissance).

Le terminal 3 comprend en outre des moyens 25 pour :

- soit changer de mode de fonctionnement après détection par le terminal 3 d'un signal d'acceptation par le PSE 2 de la requête de changement de puissance,
- soit maintenir le mode de fonctionnement actuel après détection par le terminal 3 d'un signal de refus par le PSE 2 de la requête de changement de puissance.

Le PSE 2 comprend quant à lui au moins un circuit intégré 26 formant interface entre la ligne Ethernet 5 et le processeur 15. Ce circuit 26 comprend :

- des moyens de détection 27 agencés pour :

  - identifier une signature de téléalimentation produite par un terminal 3,
  - identifier une signature de classe produite par le terminal 3 lors d'une requête de changement de puissance,

- des moyens 28 de communication avec le processeur 15 du PSE 2, ces moyens étant agencés pour :

  - transmettre au processeur 15 la requête de changement de puissance du terminal 3,
  - recevoir en retour une réponse du processeur 15 (acceptation ou refus de la requête de changement de puissance),

- des moyens 29 de transmission au terminal de la réponse (acceptation ou refus) à la requête de changement de puissance.

Le processeur 15 du PSE 2 comprend quant à lui des moyens pour analyser la requête de changement de puissance reçue du terminal 3 par l'intermédiaire du circuit 26, et des moyens pour déterminer la recevabilité de la requête (par exemple sous forme d'un programme P' implémenté sur le processeur 15), incluant notamment :

- des moyens de calcul de la nouvelle puissance $P'_{Fi}$ requise par le terminal 3 en fonction de la signature de classe identifiée,
- des moyens de comparaison de cette nouvelle puissance requise avec la puissance actuelle $P_{Fi}$ allouée,
- des moyens de calcul de la puissance totale $P_F$ à fournir par le PSE 2 et des moyens de comparaison de cette puissance totale $P_F$ avec la puissance maximale admise $P_M$.

Par ailleurs, le circuit 26 comprend de préférence plusieurs connexions 30 à des lignes Ethernet 5 pour permettre le raccordement au PSE 2 d'une pluralité de terminaux 3.

## Revendications

1. Procédé de téléalimentation d'un terminal (3) dans un réseau informatique (1) local au moyen d'un dispositif (2) de téléalimentation, comprenant, lors du raccordement du terminal à ce dispositif (2) de téléalimentation, les opérations consistant à :

   - sélectionner, parmi une pluralité de classes de puissances différentes prédéterminées, une classe correspondant à la puissance requise par ce terminal au moment du raccordement;
   - produire au moyen du terminal (3) une signature correspondant à la classe de puissance sélectionnée ;
   - identifier, dans le dispositif (2) de téléalimentation, la signature produite par le terminal (3) ;
   - en déduire la classe de la puissance ($P_{Fi}$) requise par le terminal (3),
   - déterminer le caractère acceptable de la puissance ($P_{Fi}$) requise par le terminal (3) ;
   - si la puissance requise est décrétée acceptable, allouer au terminal (3), par le dispositif (2) de téléalimentation, une puissance égale à la puissance ($P_{Fi}$) requise ;
   - si la puissance requisse est décrétée inacceptable, refuser toute allocation de puissance à délivrer par le dispositif (2) de téléalimentation au terminal (3) ;

   **caractérisé en ce qu'**il comprend en outre les opérations consistant à :

   - détecter au sein du terminal (3) une modification du besoin de puissance électrique ;
   - sélectionner parmi une pluralité de classes de puissances différentes prédéterminées une classe correspondant au nouveau besoin de puissance pour ce terminal ;
   - couper le courant de ligne pendant une durée prédéterminée, puis rétablir le courant de ligne ;
   - détecter dans le dispositif de téléalimentation cette coupure du courant de ligne, constater que sa durée a une valeur prédéterminée, et en déduire que le terminal (3) requiert un changement de classe de puissance ;
   - produire au moyen du terminal (3) une signature correspondant à la nouvelle classe de puissance sélectionnée ;
   - identifier, dans le dispositif (2) de téléalimentation, la nouvelle signature produite par le terminal (3) ;

- en déduire la classe de la nouvelle puissance ($P'_{Fi}$) requise par le terminal (3),
- déterminer le caractère acceptable de la classe de la nouvelle puissance ($P'_{Fi}$) requise par le terminal (3), et,
- si la classe de la nouvelle puissance requise est décrétée acceptable, allouer une nouvelle puissance à délivrer au terminal (3) par le dispositif (2) de téléalimentation, correspondant à la classe de la nouvelle puissance ($P'_{Fi}$) requise ;
- si la classe de la nouvelle puissance requise est décrétée inacceptable, maintenir l'allocation actuelle de la puissance à délivrer par le dispositif (2) de téléalimentation au terminal (3).

2. Procédé de téléalimentation selon la revendication 1, dans lequel la signature est **caractérisée** au moins par une grandeur physique choisie parmi une pluralité grandeurs physiques prédéterminées.

3. Procédé de téléalimentation selon la revendication 2, dans lequel :

- la production de la signature comprend une opération consistant, pour le terminal (3), à présenter sur une ligne (5) le reliant au dispositif (2) de téléalimentation un courant prédéterminé représentatif de la grandeur physique choisie,
- l'identification de la signature comprend une opération consistant, pour le dispositif (2) de téléalimentation, à mesurer l'intensité de ce courant.

4. Procédé de téléalimentation selon l'une des revendications 1 à 3, dans lequel la signature est **caractérisée** au moins par un temps de réponse du terminal (3) à un signal de tension produit par le dispositif (2) de téléalimentation.

5. Procédé de téléalimentation selon l'une des revendications 1 à 4, dans lequel les opérations de production et d'identification de la nouvelle signature comprennent les opérations suivantes, après la coupure par le terminal (3) du courant d'une ligne (5) le reliant au dispositif (2) de téléalimentation ;

- coupure par le dispositif (2) de téléalimentation de la tension d'alimentation du terminal (3) ;
- présentation par le dispositif (2) de téléalimentation d'un signal de tension d'identification d'une valeur différente de la tension d'alimentation ;
- production par le terminal (3) d'un courant d'identification ;
- coupure par le terminal (3) du courant d'identification après un temps de réponse ($t_{sign}= t_1-t_3$) prédéterminé suivant la présentation ($t_1$) par le dispositif (2) de tétéalimentation du signal de tension d'identification;
- mesure par le dispositif (2) de téléalimentation de ce temps de réponse ($t_{sign}=t_1-t_3$).

6. Procédé de téléalimentation selon la revendication 5, qui comprend l'une des opérations suivantes :

- si la classe de la nouvelle puissance requise est décrétée acceptable, remise par le dispositif (2) de téléalimentation de la tension d'alimentation du terminal (3) à un premier instant ($t_6$) prédéterminé postérieur à la coupure par le terminal (3) du courant d'identification;
- si la classe de la nouvelle puissance requise est décrétée inacceptable, remise par le dispositif (2) de téléalimentation de la tension d'alimentation du terminal (3) à un deuxième instant prédéterminé ($t'_6$), différent du premier, postérieur à la coupure par le terminal (3) du courant d'identification.

7. **Dispositif de téléalimentation (6) destiné à être incorporé à un terminal** (3) pour permettre de le télé-alimenter par une ligne Ethernet (5), ce dispositif comprenant:

- des moyens pour sélectionner, parmi une pluralité de classes de puissance différentes prédéterminées, une classe correspondant à la puissance requise par ce terminal;
- des moyens pour produire une signature correspondant à la classe de puissance sélectionnée;

**caractérisé en ce qu'**il comprend en outre:

- des moyens pour détecter (101) au sein du terminal (3) une modification du besoin de puissance électrique;
- des moyens pour sélectionner (102), parmi une pluralité de classes de puissance différentes prédéterminées, une nouvelle classe correspondant au nouveau besoin de puissance pour ce terminal ;
- des moyens pour couper le courant de ligne (103) pendant une durée ($d_1$; $t_1-t_0$) prédéterminée ;
- des moyens pour activer ensuite lesdits des moyens pour produire une signature correspondant à la classe de puissance sélectionnée.

8. Dispositif de téléalimentation selon la revendication 7, dans lequel des moyens pour produire une signature correspondant à la classe de puissance sélectionnée produisent dans la ligne Ethernet (5) un courant dit d'identification ; **caractérisé en ce qu'**il comporte en outre des moyens pour à répondre à un signal de synchronisation ($t_2$) produit par le dispositif (2) de téléalimentation, en interrompant la production dudit courant d'identification au bout- d'un délai ($d_{sign}=t_3-t_2$) prédéterminé qui caractérise une signature de classe de puissance.

9. **Dispositif de téléalimentation (26) d'un terminal distant** (3) relié à ce dispositif par une ligne Ethernet (5), comprenant:

    - des moyens pour identifier, une signature produite par le terminal (3) et en déduire une classe de la puissance ($P_{Fi}$) requise par le terminal (3),
    - des moyens pour déterminer le caractère acceptable de la classe de puissance ($P_{Fi}$) requise par le terminal (3),
    - des moyens pour, si la classe de puissance requise est décrétée acceptable, allouer au terminal (3), une puissance correspondant à la classe de puissance ($P_{Fi}$) requise ;
    - des moyens pour, si la classe de puissance requise est décrétée inacceptable, refuser d'allouer au terminal (3), une puissance correspondant à la classe de puissance ($P_{Fi}$) requise ;

    **caractérisé en ce qu'**il comprend en outre :

    - des moyens pour détecter (104) dans le dispositif de téléalimentation (2) une coupure du courant de ligne, constater que sa durée ($d_1$ ; $t_1-t_0$) a une valeur au moins égale à une valeur prédéterminée, et en déduire que le terminal (3) requiert un changement de classe de puissance ;
    - et des moyens pour activer alors :

        -- lesdits moyens pour identifier, une signature et en déduire une classe de la puissance ($P_{Fi}$) requise par le terminal (3),
        -- lesdits moyens pour déterminer le caractère acceptable de la classe de puissance ($P_{Fi}$) requise par le terminal (3),
        -- lesdits moyens pour allouer au terminal (3), une puissance correspondant à la classe de puissance ($P_{Fi}$) requise, si la classe de puissance requise est décrétée acceptable ;
        -- lesdits moyens pour refuser d'allouer au terminal (3) une puissance correspondant à la classe de puissance ($P_{Fi}$) requise, si la classe de puissance requise est décrétée inacceptable.

10. Dispositif de téléalimentation selon la revendication 9, **caractérisé en ce qu'**il comporte en outre :

    - des moyens pour couper ($d_4$, $d_5$) la téléalimentation du terminal (3) après avoir détecté une requête de changement de classe de puissance ;
    - des moyens pour présenter ensuite ($d_4$) une tension d'identification ayant une valeur différente de la tension d'alimentation,
    - des moyens pour détecter alors le courant de ligne et en déduire une caractéristique de la signature.

11. Dispositif de téléalimentation selon la revendication 9, **caractérisé en ce qu'**il comporte en outre :

    - des moyens pour couper ($t_0$) la téléalimentation du terminal (3) après avoir détecter une requête de changement de classe de puissance
    - des moyens pour présenter ensuite ($t_1$) une tension d'identification ayant une valeur différente de la tension d'alimentation, et émettre un signal de synchronisation ($t_2$) pendant la présentation ($t_1$) de cette tension d'identification,
    - des moyens pour détecter une coupure ($t_3$) du courant d'identification,
    - des moyens pour mesurer le délai ($d_{sign}=t_3-t_2$) entre le signal de synchronisation ($t_2$) émis par le dispositif (2) de téléalimentation ($t_2$) et la coupure ($t_3$) du courant d'identification, et en déduire une caractéristique de la signature.

12. Dispositif de téléalimentation selon la revendication 9, **caractérisé en ce que** :

    - les moyens pour, si la classe de puissance requise est décrétée acceptable, allouer au terminal (3), une puissance correspondant à la classe de puissance ($P_{Fi}$) requise, comportent des moyens pour remettre la tension d'alimentation du terminal (3) après un délai ($d_{rep} = t_6-t_4$) prédéterminé, compté par rapport à la coupure

($t_4$) de la tension d'identification par le dispositif de téléalimentation (2) ;
- et les moyens pour, si la classe de puissance requise est décrétée inacceptable, refuser d'allouer au terminal (3), une puissance correspondant à la classe de puissance ($P_{Fi}$) requise, comportent des moyens pour remettre la tension d'alimentation du terminal (3) après un délai ($t_4$-$t'_6$) prédéterminé, différent du premier, et compté par rapport à la coupure ($t_4$) de la tension d'identification par le dispositif de téléalimentation (2).

**13.** Terminal Ethernet **caractérisé en ce qu'**il comporte un dispositif de téléalimentation selon l'une des revendications 7 ou 8.

**14.** Concentrateur Ethernet **caractérisé en ce qu'**il comporte un dispositif de téléalimentation selon l'une des revendications 9 à 12.

**15.** Commutateur Ethernet **caractérisé en ce qu'**il comporte un dispositif de téléalimentation selon l'une des revendications 9 à 12.

**16.** Répéteur Ethernet **caractérisé en ce qu'**il comporte un dispositif de téléalimentation selon l'une des revendications 9 à 12.

**Claims**

**1.** A method for the remote power feeding of a terminal (3) in a local area network (1) by means of a remote power feeding device (2) comprising, when the terminal is connected to that remote power feeding device (2), operations consisting of:

- selecting from among a plurality of classes of different predetermined powers, a class corresponding to the power required by that terminal at the time of connection;
- producing by means of the terminal (3) a signature corresponding to the selected power class;
- identifying, within the remote power feeding device (2), the signature produced by the terminal (3);
- deducing from it the power class ($P_{FI}$) required by the terminal (3),
- determining the acceptability of the power ($P_{FI}$) required by the terminal (3);
- if the required power is deemed acceptable, allocating to the terminal (3), by the remote power feeding device (2), a power equal to the required power ($P_{FI}$);
- if the required power is deemed unacceptable, denying any allocation of power to be delivered by the remote power feeding device (2) to the terminal (3);

**characterized in that** it further comprises the operations consisting of:

- detecting within the terminal (3) a change in the electrical power need;
- selecting from among a plurality of classes with different predetermined power levels, a class corresponding to the new power need for that terminal;
- interrupting the line current for a predetermined duration, then re-establishing the line current;
- detecting, within the remote power feeding device, this line current interruption, observing that its duration has a predetermined value, and deducing therefrom that the terminal (3) requires a change in power class;
- producing by means of the terminal (3) a signature corresponding to the selected power class;
- identifying, within the remote power feeding device (2) the signature produced by the terminal (3);
- deducing from it the new power ($P_{FI}$) required by the terminal (3),
- determining the acceptability of the new power class ($P_{FI}$) required by the terminal (3), and
- if the required new power's class is deemed acceptable, allocating a new power to be delivered to the terminal (3) by the remote power feeding device (2), corresponding to the new required power's ($P_{FI}$) class;
- if the new required power's class is deemed unacceptable, maintaining the current allocation of the power to be delivered to the terminal (3) by the remote power feeding device (2),

**2.** A remote power feeding method according to claim 1, wherein the signature is **characterized** at least by a physical value chosen from among a plurality of predetermined physical values.

**3.** A remote power feeding method according to claim 2, wherein:

- the producing of the signature comprises an operation consisting, for the terminal (3), of presenting on a line (5) connecting it to the remote power feeding device (2), a predetermined current representative of the physical value chosen,
- the identifying of the signature comprises an operation consisting, for the remote power feeding device (2), of measuring the value of that current.

4. A remote power feeding method according to one of the claims 1 to 3, wherein the signature is **characterized** at least by a response time of the terminal (3) at a voltage signal produced by the remote power feeding device (2).

5. A remote power feeding method according to one of the claims 1 to 4, wherein the operations of producing and identifying the new signature comprise the following operations, after the interruption by the terminal (3) of the current of a line (5) connecting it to the remote power feeding device (2):

- the interruption, by the remote power feeding device (2), of the terminal's (3) supply voltage;
- the presentation, by the remote power feeding device (2), of an identification voltage signal whose value is different from the supply voltage;
- the production, by the terminal (3), of an identification current;
- the interruption, by the terminal (3) of the identification current after a predetermined response time ($t_{sign}$=t1 - t3) based on the presentation (t1) by the remote power feeding device (2), of the identification voltage signal;
- the measurement, by the remote power feeding device (2), of that response time ($t_{sign}$=t1-t3).

6. A remote power feeding method according to claim 5, which comprises the following operations:

- if the new required power's class is deemed acceptable, the restoration by the remote power feeding device (2), of the supply voltage of the terminal (3) at a first predetermined moment (t6) subsequent to the interruption by the terminal (3) of the identification current;
- if the new required power's class is deemed unacceptable (3) at a second predetermined moment (t'6), different from the first one, subsequent to the interruption by the terminal (3) of the identification current.

7. **A remote power feeding device (6) intended to be incorporated into a terminal** (3) to make it possible to remotely power it via an Ethernet line (5), this device comprising:

- means for selecting, from among a plurality of different predetermined power classes, a class corresponding to the power required by that terminal;
- means for producing a signature corresponding to the selected power class;

**characterized in that** it further consists of:

- means for detecting (101), within the terminal (3), a change in the electrical power need; means for selecting (102), from among a plurality of different predetermined power classes, a new class corresponding to the new power need for that terminal;
- means for interrupting the line current (103) during a predetermined duration (d1; t1-t0);
- means for thereafter activating said means for producing a signature corresponding to the selected power class.

8. A remote power feeding device according to claim 7, wherein means for producing a signature corresponding to the selected power class produce, within the Ethernet line (5) a so-called identification current; **characterized in that** it further comprises means for responding to a synchronization signal (t2) produced by the remote power feeding device (2), by interrupting the production of said identification current at the end of a predetermined timespan ($d_{sign}$=t3-t2) that characterizes a power class signature.

9. **A remote power feeding device** (26) powering a remote terminal (3) connected to that device by an Ethernet line (5), comprising:

- means for identifying a signature produced by the terminal (3) and deducing from it a power class ($P_{FI}$) required by the terminal (3),
- means for determining the acceptability of the power class ($P_{FI}$) required by the terminal (3),
- means for, if the required power class is deemed acceptable, allocating to the terminal (3) a power corresponding to the required power class ($P_{FI}$);

- means for, if the required power class is deemed unacceptable, refusing to allocate to the terminal (3) a power corresponding to the required power class ($P_{FI}$);

**characterized in that** it further consists of:

- means for detecting (104) within the remote power feeding device (2) an interruption in the line current, observing that its duration (d1; t1-t0) has a value at least equal to a predetermined value, and deducing therefrom that the terminal (3) requires a change in power class;
- and means for activating, if this occurs:
- said means for identifying a signature and deducing therefrom a power class ($P_{FI}$) required by the terminal (3),
- said means for determining the acceptability of the power class ($P_{FI}$) required by the terminal (3),
- said means for allocating to the terminal (3), a power corresponding to the power class ($P_{FI}$), if the power required power class is deemed acceptable;
- said means for refusing to allocate to the terminal (3), a power corresponding to the power class ($P_{FI}$), if the power required power class is deemed unacceptable.

10. A remote power feeding device according to claim 9, **characterized in that** it further comprises:

- means for interrupting (d4, d5) the remote powering of the terminal (3) after having detected a power class change request;
- means for thereafter presenting (d4) an identification voltage having a different value than the supply voltage;
- means for detecting, in this case, the line current, and for deducing therefrom a characteristic of the signature.

11. A remote power feeding device according to claim 9, **characterized in that** it further comprises:

- means for interrupting (t0) the remote powering of the terminal (3) after having detecting a request to change the power class,
- means for thereafter presenting (t1) an identification voltage having a different value than the supply voltage, and emitting a synchronization signal (t2) during the presenting (t1) of that identification voltage,
- means for detecting an interruption (t3) in the identification current,
- means for measuring the timeframe ($d_{sign}$=t3-t2) between the synchronization signal (t2) emitted by the remote power feeding (t2) device (2) and the interruption of the identification current, and deducing therefrom a characteristic of the signature.

12. A remote power feeding device according to claim 9, **characterized in that**:

- the means for, if the required power class is deemed acceptable, allocating to the terminal (3), a power corresponding to the required power class ($P_{FI}$), comprise means for restoring the terminal's (3) supply voltage after a predetermined timeframe ($d_{rop}$= t6-t4), counted in relation to the interruption (t4) of the identification voltage by the remote power feeding device (2);
- and means for, if the required power class is deemed unacceptable, refusing to allocate to the terminal (3), a power corresponding to the required power class ($P_{FI}$) comprise means for restoring the terminal's (3) supply voltage after a predetermined timeframe (t4-t6), different from the first one, and counted in relation to the interruption (t4) of the identification voltage by the remote power feeding device (2);

13. An Ethernet terminal **characterized in that** it comprises a remote power feeding device according to one of the claims 7 or 8.

14. An Ethernet hub **characterized in that** it comprises a remote power feeding device according to one of the claims 9 to 12.

15. An Ethernet switch **characterized in that** it comprises a remote power feeding device according to one of the claims 9 to 12.

16. An Ethernet repeater **characterized in that** it comprises a remote power feeding device according to one of the claims 9 to 12.

**Patentansprüche**

1. Verfahren zur Fernspeisung eines Endgeräts (3) in einem lokalen Computernetzwerk (1) anhand einer Fernspeisungsvorrichtung (2), welches bei dem Anschluss des Endgeräts an diese Fernspeisungsvorrichtung (2) die folgenden Vorgänge umfasst:

   - Auswählen, unter einer Mehrzahl von verschiedenen vorbestimmten Leistungsklassen, einer Klasse, welche der von diesem Endgerät zum Zeitpunkt des Anschließens geforderten Leistung entspricht;
   - Erzeugen, anhand des Endgeräts (3), einer der ausgewählten Leistungsklasse entsprechenden Signatur;
   - Identifizieren, in der Fernspeisungsvorrichtung (2), der vom Endgerät (3) erzeugten Signatur;
   - Ableiten, aus der Signatur, der vom Endgerät (3) geforderten Leistungsklasse ($P_{Fi}$),
   - Bestimmen des akzeptablen Charakters der von dem Endgerät (3) geforderten Leistung ($P_{Fi}$);
   - wenn die geforderte Leistung als akzeptabel erklärt wird, Zuteilen, durch die Fernspeisungsvorrichtung (2), einer der geforderten Leistung ($P_{Fi}$) entsprechenden Leistung an das Endgerät (3);
   - wenn die geforderte Leistung als inakzeptabel erklärt wird, Verweigern jeglicher Zuteilung einer von der Fernspeisungsvorrichtung (2) an das Endgerät (3) zu liefernden Leistung;

   **dadurch gekennzeichnet, dass** es weiterhin die folgenden Vorgänge umfasst:

   - Erkennen, innerhalb des Endgeräts (3), einer Veränderung des Bedarfs an elektrischer Leistung;
   - Auswählen, unter einer Mehrzahl von verschiedenen vorbestimmten Leistungsklassen, einer Klasse, die dem neuen Leistungsbedarf für dieses Endgerät angepasst ist;
   - Abschalten des Netzstroms während einer vorbestimmten Dauer, und anschließendes Wiedereinschalten des Netzstroms;
   - Erkennen dieser Netzstromunterbrechung in der Fernspeisungsvorrichtung, Feststellen, dass ihre Dauer einen vorbestimmten Wert hat, und Ableiten daraus, dass das Endgerät (3) eine Veränderung der Leistungsklasse erfordert;
   - Erzeugen, anhand des Endgeräts (3), einer der ausgewählten neuen Leistungsklasse entsprechenden Signatur;
   - Identifizieren, in der Fernspeisungsvorrichtung (2), der von dem Endgerät (3) erzeugten neuen Signatur;
   - Ableiten der Klasse der von dem Endgerät (3) geforderten neuen Leistungsklasse ($P'_{Fi}$) daraus,
   - Bestimmen des akzeptablen Charakters der Klasse der von dem Endgerät (3) geforderten neuen Leistung, und,
   - wenn die Klasse der geforderten neuen Leistung als akzeptabel erklärt wird, Zuteilen einer von der Fernspeisungsvorrichtung (2) an das Endgerät (3) zu liefernden neuen Leistung, welche der Klasse der geforderten neuen Leistung ($P'_{Fi}$) entspricht;
   - wenn die Klasse der geforderten neuen Leistung als inakzeptable erklärt wird, Beibehalten der momentanen Zuteilung der von der Fernspeisungsvorrichtung (2) an das Endgerät (3) zu liefernden Leistung.

2. Fernspeisungsverfahren nach Anspruch 1, wobei die Signatur mindestens durch eine physikalische Größe, gewählt unter einer Mehrzahl von vorbestimmten physikalischen Größen, **gekennzeichnet** ist.

3. Fernspeisungsverfahren nach Anspruch 2, wobei:

   - Die Erzeugung der Signatur einen Vorgang umfasst, welcher für das Endgerät (3) darin besteht, auf einer Leitung (5), die es mit der Fernspeisungsvorrichtung (2) verbindet, einen vorbestimmten Strom anzulegen, welcher für die ausgewählte Größe repräsentativ ist,
   - die Identifikation der Signatur einen Vorgang umfasst, welcher für die Fernspeisungsvorrichtung (2) darin besteht, die Intensität dieses Stroms zu messen.

4. Fernspeisungsverfahren nach einem der Ansprüche 1 bis 3, wobei die Signatur mindestens durch eine Ansprechzeit des Endgeräts (3) auf ein von der Fernspeisungsvorrichtung (2) erzeugtes Spannungssignal **gekennzeichnet** ist.

5. Fernspeisungsverfahren nach einem der Ansprüche 1 bis 4, wobei die Vorgänge des Erzeugens und des Identifizierens der neuen Signatur nach dem Abschalten, durch das Endgerät (3), des Netzstroms (5), über welchen es mit der Fernspeisungsvorrichtung (2) verbunden ist, die folgenden Vorgänge umfassen:

   - Abschalten, durch die Fernspeisungsvorrichtung (2), der Versorgungsspannung des Endgeräts (3);
   - Anlegen, durch die Fernspeisungsvorrichtung (2), eines Identifizierspannungssignals, dessen Wert sich von der Versorgungsspannung unterscheidet;
- Erzeugen, durch das Endgerät (3), eines Identifizierstroms;
- Abschalten, durch das Endgerät (3), des Identifizierstroms nach Ablauf einer gemäß dem Anlegen ($t_1$), durch die Fernspeisungsvorrichtung (2), des Identifizierspannungssignals vorbestimmten Ansprechzeit ($t_{sign}=t_1-t_3$);
- Messen, durch die Fernspeisungsvorrichtung (2), dieser Ansprechzeit ($t_{sign}=t_1-t_3$).

**6.** Fernspeisungsverfahren nach Anspruch 5, einen der folgenden Vorgänge umfassend:

- Wenn die Klasse der geforderten neuen Leistung als akzeptabel erklärt wird, Wiedereinschalten, durch die Fernspeisungsvorrichtung (2), der Versorgungsspannung des Endgeräts (3) zu einem ersten vorbestimmten Zeitpunkt ($t_6$) nach dem Abschalten, durch das Endgerät (3), des Identifizierstroms;
- wenn die Klasse der geforderten neuen Leistung als inakzeptabel erklärt wird, Wiedereinschalten, durch die Fernspeisungsvorrichtung (2), der Versorgungsspannung des Endgeräts (3) zu einem zweiten vorbestimmten Zeitpunkt ($t'_6$), welcher sich von dem ersten Zeitpunkt unterscheidet, nach dem Abschalten, durch das Endgerät (3), des Identifizierstroms.

**7. Fernspeisungsvorrichtung (6), welche für den Einbau in ein Endgerät (3) bestimmt ist**, um dessen Fernspeisung über eine Ethernet-Leitung (5) zu ermöglichen, wobei diese Vorrichtung umfasst:

- Mittel zum Auswählen, unter einer Mehrzahl von verschiedenen vorbestimmten Leistungsklassen, einer Klasse, welcher der von diesem Endgerät geforderten Leistung entspricht;
- Mittel zum Erzeugen einer Signatur, welche der ausgewählten Leistungsklasse entspricht;

**dadurch gekennzeichnet, dass** sie weiterhin umfasst:

- Mittel zum Erkennen (101), innerhalb des Endgeräts (3), einer Veränderung des Bedarfs an elektrischer Leistung;
- Mittel zum Auswählen (102), unter einer Mehrzahl von verschiedenen vorbestimmten Leistungsklassen, einer neuen Klasse, welche dem neuen Leistungsbedarf für dieses Endgerät entspricht;
- Mittel zum Abschalten des Netzstroms (103) während einer vorbestimmten Dauer ($d_1$; $t_1-t_0$);
- Mittel zum anschließenden Aktivieren der besagten Mittel, um eine der ausgewählten Leistungsklasse entsprechende Signatur zu erzeugen.

**8.** Fernspeisungsvorrichtung nach Anspruch 7, wobei die Mittel zum Erzeugen einer der ausgewählten Leistungsklasse entsprechenden Signatur in der Ethernet-Leitung (5) einen sogenannten Identifizierstrom erzeugen;
**dadurch gekennzeichnet, dass** sie weiterhin Mittel umfasst, um auf ein von der Fernspeisungsvorrichtung (2) erzeugtes Synchronisationssignal ($t_2$) anzusprechen, indem die Erzeugung des besagten Identifizierstroms nach Ablauf einer vorbestimmten Zeitspanne ($d_{sign}=t3-t2$), welche eine Leistungsklasse-Signatur kennzeichnet, unterbrochen wird.

**9. Vorrichtung zur Fernspeisung (26) eines entfernten Endgeräts (3)**, welches über eine Ethernet-Leitung (5) mit dieser Vorrichtung verbunden ist, umfassend:

- Mittel zum Identifizieren einer von dem Endgerät (3) erzeugten Signatur, und Ableiten einer von dem Endgerät (3) geforderten Leistungsklasse ($P_{Fi}$) daraus;
- Mittel zum Bestimmen des akzeptablen Charakters der von dem Endgerät (3) geforderten Leistungsklasse ($P_{Fi}$);
- Mittel zum, wenn die geforderte Leistungsklasse als akzeptabel erklärt wird, Zuteilen einer der geforderten Leistungsklasse ($P_{Fi}$) entsprechenden Leistung an das Endgerät (3);
- Mittel zum, wenn die geforderte Leistungsklasse als inakzeptabel erklärt wird, Verweigern der Zuteilung einer der geforderten Leistungsklasse ($P_{Fi}$) entsprechenden Leistung an das Endgerät (3);

**dadurch gekennzeichnet, dass** sie weiterhin umfasst:

- Mittel zum Erkennen (104), in der Fernspeisungsvorrichtung (2), einer Unterbrechung des Netzstroms, zum Feststellen, dass deren Dauer ($d_1$; $t_1-t_0$) einen Wert hat, der mindestens einem vorbestimmten Wert entspricht, und zum Ableiten daraus, dass das Endgerät (3) eine Veränderung der Leistungsklasse erfordert;
- und Mittel zum anschließenden Aktivieren:
- Der besagten Mittel zum Identifizieren einer Signatur und zum Ableiten einer von dem Endgerät (3) geforderten Leistungsklasse ($P_{Fi}$) daraus;

- der besagten Mittel zum Bestimmen des akzeptablen Charakters der von dem Endgerät (3) geforderten Leistungsklasse ($P_{Fi}$),

- der besagten Mittel zum Zuteilen, an das Endgerät (3), einer der geforderten Leistungsklasse ($P_{Fi}$) entsprechenden Leistung, wenn die geforderte Leistungsklasse als akzeptabel erklärt wird;

- der besagten Mittel zum Verweigern der Zuteilung, an das Endgerät (3), einer der geforderten Leistungsklasse ($P_{Fi}$) entsprechenden Leistung, wenn die geforderte Leistungsklasse als inakzeptabel erklärt wird.

10. Fernspeisungsvorrichtung nach Anspruch 9, **dadurch gekennzeichnet, dass** sie weiterhin umfasst:

- Mittel zum Unterbrechen ($d_4$, $d_5$) der Fernspeisung des Endgeräts (3), nachdem eine Anforderung für die Veränderung der Leistungsklasse erkannt wurde;

- Mittel zum anschließenden Anlegen ($d_4$) einer Identifizierspannung, deren Wert sich von der Versorgungsspannung unterscheidet,

- Mittel zum anschließenden Erkennen des Netzstroms, um daraus ein Merkmal der Signatur abzuleiten.

11. Fernspeisungsvorrichtung nach Anspruch 9, **dadurch gekennzeichnet, dass** sie weiterhin umfasst:

- Mittel zum Unterbrechen ($t_0$) der Fernspeisung des Endgeräts (3), nachdem eine Anforderung für die Veränderung der Leistungsklasse erkannt wurde;

- Mittel zum anschließenden Anlegen ($t_1$) einer Identifizierspannung, deren Wert sich von der Versorgungsspannung unterscheidet, und zum Ausgeben eines Synchronisationssignals ($t_2$) während des Anlegens ($t_1$) dieser Identifizierspannung,

- Mittel zum Erkennen einer Unterbrechung ($t_3$) des Identifizierstroms,

- Mittel zum Messen der Zeitspanne ($d_{sign}=t_3-t_2$) zwischen dem von der Vorrichtung (2) für die Fernspeisung ($t_2$) ausgegebenen Synchronisationssignal ($t_2$) und der Unterbrechung ($t_3$) des Identifizierstroms, und zum Ableiten eines Merkmals der Signatur daraus.

12. Fernspeisungsvorrichtung nach Anspruch 9, **dadurch gekennzeichnet, dass**:

- Die Mittel zum, wenn die geforderte Leistungsklasse als akzeptabel erklärt wird, Zuteilen einer der geforderten Leistungsklasse ($P_{Fi}$) entsprechenden Leistung an das Endgerät (3), Mittel zum Wiedereinschalten der Versorgungsspannung des Endgeräts (3) nach Ablauf einer vorbestimmten Zeitspanne ($d_{rop}= t_6-t_4$), berechnet in Bezug auf die Unterbrechung ($t_4$) der Identifizierspannung durch die Fernspeisungsvorrichtung (2) umfassen;

- und die Mittel zum, wenn die geforderte Leistungsklasse als inakzeptabel erklärt wird, Verweigern der Zuteilung einer der geforderten Leistungsklasse ($P_{Fi}$) entsprechenden Leistung an das Endgerät (3), Mittel zum Wiedereinschalten der Versorgungsspannung des Endgeräts (3) nach Ablauf einer vorbestimmten Zeitspanne ($t_4-t'_6$), welche sich von der ersten Zeitspanne unterscheidet, berechnet in Bezug auf die Unterbrechung ($t_4$) der Identifizierspannung durch die Fernspeisungsvorrichtung (2) umfassen.

13. Ethernet-Endgerät, **dadurch gekennzeichnet, dass** es eine Fernspeisungsvorrichtung nach einem der Ansprüche 7 oder 8 enthält.

14. Ethernet-Konzentrator, **dadurch gekennzeichnet, dass** er eine Fernspeisungsvorrichtung nach einem der Ansprüche 9 bis 12 enthält.

15. Ethernet-Umschalter, **dadurch gekennzeichnet, dass** er eine Fernspeisungsvorrichtung nach einem der Ansprüche 9 bis 12 enthält.

16. Ethernet-Repeater, **dadurch gekennzeichnet, dass** er eine Fernspeisungsvorrichtung nach einem der Ansprüche 9 bis 12 enthält.

EP 1 848 147 B1

FIG.1

19

FIG.2

101

DETECTER LE MODE DE
FONCTIONNEMENT DU TERMINAL

NON — CHANGEMENT
DE MODE DE
FONCTIONNEMENT
DEMANDE ?

FIG.3

OUI

102

DETERMINER LA NOUVELLE
PUISSANCE REQUISE

103

PRODUIRE UN SIGNAL
CARACTERISTIQUE DE LA
NOUVELLE PUISSANCE REQUISE

105

CALCULER LA NOUVELLE
PUISSANCE A FOURNIR PAR LE PSE

104

DETECTER LE SIGNAL

COMPARER LA NOUVELLE
PUISSANCE A FOURNIR A LA
PUISSANCE MAXIMALE ADMISE

106

$P'_{Fi} < P_{Fi}$ ? — NON

$P_F \leq P_M$ ?

107

OUI

OUI

ALLOUER UNE NOUVELLE
PUISSANCE A DELIVRER, EGALE A
LA PUISSANCE REQUISE

NON

110

MAINTENIR L'ALLOCATION DE LA
PUISSANCE ACTUELLE
A DELIVRER AU TERMINAL

108

METTRE A JOUR LA PUISSANCE
TOTALE ALLOUEE PAR LE PSE

109

ENVOYER AU TERMINAL
UN SIGNAL DE REFUS

ENVOYER AU TERMINAL
UN SIGNAL D'ACCEPTATION

111

EP 1 848 147 B1

FIG.4

d₁ · d₂

Courant de ligne

d₃

t₀ t₁    t₂  t₃    t₄ t₅ t₆  t'₆

Courant de ligne

Tension d'alimentation

FIG.5

Tension d'identification

Courant de classe

22

**EP 1 848 147 B1**

## RÉFÉRENCES CITÉES DANS LA DESCRIPTION

**Documents brevets cités dans la description**

- EP 1100226 A, Alcatel

- US 20061082220 A